# EUROPEAN PATENT APPLICATION

(11) **EP 4 507 222 A1**
(43) Date of publication of application: **12.02.2025**
(21) Application number: 23190259.4
(22) Date of filing: 08.08.2023
(51) Int. Cl.: H04L 1/00

(54) **OPTIMIZING A WAVEFORM FOR CHANNEL CONDITIONS**

(71) Applicant: Nokia Solutions and Networks Oy, 02610 Espoo (FI)
(72) Inventor: MOHAMMADI, Jafar, Munich (DE); MARASINGHE, Dileepa, Oulu (FI); NGUYEN, Le Hang, Gerlingen (DE); CHEN, Yejian, Stuttgart (DE)
(74) Representative: Nokia EPO representatives

(57) **Abstract**

Disclosed is a method comprising providing to a machine learning model, as an input, a channel estimation or a plurality of raw pilots, obtaining, from the machine learning model, as an output, a label indicating a channel model, wherein the channel model is representative of channel conditions, based on the label, determining a waveform associated with the channel conditions, indicating the waveform to the receiver, and performing the transmission to the receiver using the waveform.

## Description

### Field

The following exemplary embodiments relate to selecting a waveform based on channel conditions to optimize the waveform for the channel conditions.

### Background

In wireless communication waveforms are selected for transmissions. To select a suitable waveform, various criteria may be used. For example, there may be multiple candidates for a waveform to be used and the selection may be based on for example parameters such as the transmission capability of the devices, desired Peak to Average Power Ratio (PAPR) and Adjacent Channel Leakage Ratio (ACLR) conditions, traffic conditions and other criteria. Channel conditions in a wireless network change and recognizing the channel conditions may be used for selecting a waveform. Effective recognition of a current channel condition is desirable as there may be great number of different channel conditions, such as up to an infinite number of different channel conditions.

### Brief Description

The scope of protection sought for various embodiments of the invention is set out by the independent claims. The exemplary embodiments and features, if any, described in this specification that do not fall under the scope of the independent claims are to be interpreted as examples useful for understanding various embodiments of the invention.

According to a first aspect there is provided an apparatus comprising means for performing: providing to a machine learning model, as an input, a channel estimation or a plurality of raw pilots, obtaining, from the machine learning model, as an output, a label indicating a channel model, wherein the channel model is representative of channel conditions, based on the label, determining a waveform associated with the channel conditions, indicating the waveform to the receiver, and performing the transmission to the receiver using the waveform.

In some example embodiments according to the first aspect, the means comprises at least one processor, and at least one memory storing instructions that, when executed by the at least one processor, to cause the performance of the apparatus.

According to a second aspect there is provided an apparatus comprising at least one processor, and at least one memory storing instructions that, when executed by the at least one processor, are configured to cause the apparatus at least to: provide to a machine learning model, as an input, a channel estimation or a plurality of raw pilots, obtain, from the machine learning model, as an output, a label indicating a channel model, wherein the channel model is representative of channel conditions, based on the label, determine a waveform associated with the channel conditions, indicate the waveform to the receiver, and perform the transmission to the receiver using the waveform.

According to a third aspect there is provided a method comprising: providing to a machine learning model, as an input, a channel estimation or a plurality of raw pilots, obtaining, from the machine learning model, as an output, a label indicating a channel model, wherein the channel model is representative of channel conditions, based on the label, determining a waveform associated with the channel conditions, indicating the waveform to the receiver, and performing the transmission to the receiver using the waveform.

In some example embodiment according to the third aspect the method is a computer implemented method.

According to a fourth aspect there is provided a computer program comprising instructions which, when executed by an apparatus, cause the apparatus to perform at least the following: provide to a machine learning model, as an input, a channel estimation or a plurality of raw pilots, obtain, from the machine learning model, as an output, a label indicating a channel model, wherein the channel model is representative of channel conditions, based on the label, determine a waveform associated with the channel conditions, indicate the waveform to the receiver, and perform the transmission to the receiver using the waveform.

According to a fifth aspect there is provided a computer program comprising instructions stored thereon for performing at least the following: providing to a machine learning model, as an input, a channel estimation or a plurality of raw pilots, obtaining, from the machine learning model, as an output, a label indicating a channel model, wherein the channel model is representative of channel conditions, based on the label, determining a waveform associated with the channel conditions, indicating the waveform to the receiver, and performing the transmission to the receiver using the waveform.

According to a sixth aspect there is provided a non-transitory computer readable medium comprising program instructions that, when executed by an apparatus, cause the apparatus to perform at least the following: provide to a machine learning model, as an input, a channel estimation or a plurality of raw pilots, obtain, from the machine learning model, as an output, a label indicating a channel model, wherein the channel model is representative of channel conditions, based on the label, determine a waveform associated with the channel conditions, indicate the waveform to the receiver, and perform the transmission to the receiver using the waveform.

According to a seventh aspect there is provided a non-transitory computer readable medium comprising program instructions stored thereon for performing at least the following: providing to a machine learning model, as an input, a channel estimation or a plurality of raw pilots, obtaining, from the machine learning model, as an output, a label indicating a channel model, wherein the channel model is representative of channel conditions, based on the label, determining a waveform associated with the channel conditions, indicating the waveform to the receiver, and performing the transmission to the receiver using the waveform.

According to an eighth aspect there is provided a computer readable medium comprising program instructions that, when executed by an apparatus, cause the apparatus to perform at least the following: provide to a machine learning model, as an input, a channel estimation or a plurality of raw pilots, obtain, from the machine learning model, as an output, a label indicating a channel model, wherein the channel model is representative of channel conditions, based on the label, determine a waveform associated with the channel conditions, indicate the waveform to the receiver, and perform the transmission to the receiver using the waveform.

According to a ninth aspect there is provided a computer readable medium comprising program instructions stored thereon for performing at least the following: providing to a machine learning model, as an input, a channel estimation or a plurality of raw pilots, obtaining, from the machine learning model, as an output, a label indicating a channel model, wherein the channel model is representative of channel conditions, based on the label, determining a waveform associated with the channel conditions, indicating the waveform to the receiver, and performing the transmission to the receiver using the waveform.

### List of Drawings

In the following, the invention will be described in greater detail with reference to the embodiments and the accompanying drawings, in which
FIG. 1 illustrates an example embodiment of a radio access network.
FIG. 2 illustrates a flow chart according to an example embodiment of optimizing a waveform for current channel conditions.
FIG. 3A illustrates an example embodiment in which a transmission system for a single carrier comprises trainable components that may be used for optimizing the waveform for transmission using machine learning.
FIG. 3B provides an example illustration of signal constellations.
FIG. 4 illustrates an example embodiment in which online inference is used.
FIG. 5A and 5B illustrate examples of index tables.
FIG. 6A and 6B illustrate signaling charts according to example embodiments.
FIG. 7 illustrates an example embodiment of a training process for determining an optimal waveform for a transmission system.
FIG. 8A-8K illustrate simulation results for some examples.
FIG. 9 illustrates an example embodiment of an apparatus.

### Description of Embodiments

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device. The above-described embodiments of the circuitry may also be considered as embodiments that provide means for carrying out the embodiments of the methods or processes described in this document.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, micro-controllers, microprocessors, other electronic units designed to perform the functions described herein, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via any suitable means. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments described herein may be implemented in a communication system, such as in at least one of the following: Long Term Evolution (LTE), LTE-Advanced, a fifth generation (5G) mobile or cellular communication system, 5G-Advanced and/or 6G. The embodiments are not, however, restricted to the systems given as an example but a person skilled in the art may apply the solution to other communication systems provided with necessary properties.

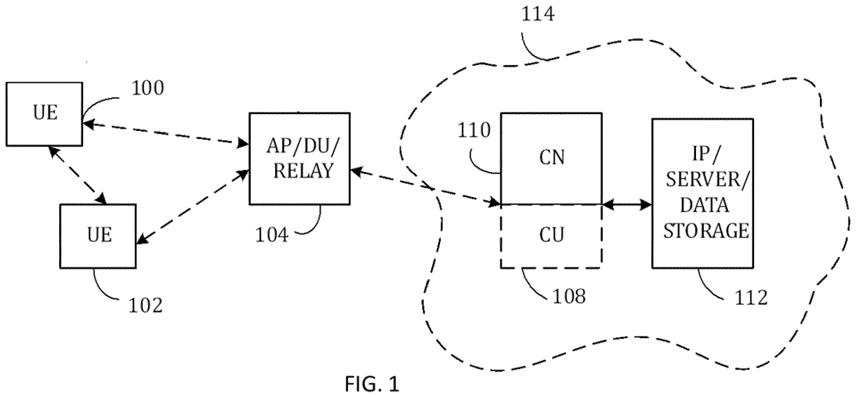

FIG. 1 depicts an example embodiment of a simplified system architecture showing some elements and functional entities, all being logical units, whose implementation may differ from what is shown. The connections shown in FIG. 1 are logical connections; the actual physical connections may be different. It is apparent to a person skilled in the art that the system may comprise also other functions and structures than those shown in FIG. 1. The example of FIG. 1 shows a part of an example embodiment of a radio access network.

FIG. 1 shows terminal devices 100 and 102 configured to be in a wireless connection on one or more communication channels in a cell with an access node (such as (e/g)NodeB) 104 providing the cell. The terminal devices 100 and 102 may also be called as mobile device, or user equipment (UE), or user terminal, user device, etc. The access node 104 may also be referred to as a node, or a base station, or any other type of interfacing device including a relay station capable of operating in a wireless environment. The physical link from a terminal device to a (e/g)NodeB is called uplink (UL) or reverse link and the physical link from the (e/g)NodeB to the terminal device is called downlink (DL) or forward link. It should be appreciated that (e/g)NodeBs or their functionalities may be implemented by using any access node, host, server or access point etc. entity suitable for such a usage. It is to be noted that although one cell is discussed in this exemplary embodiment, for the sake of simplicity of explanation, multiple cells may be provided by one access node in some example embodiments.

A communication system may comprise more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The (e/g)NodeB includes or is coupled to transceivers. From the transceivers of the (e/g)NodeB, a connection is provided to an antenna unit that establishes bi-directional radio links to user devices. The antenna unit may comprise a plurality of antennas or antenna elements. The (e/g)NodeB is further connected to core network 110 (CN or next generation core NGC). Depending on the system, the counterpart on the CN side may be a serving gateway (S-GW, routing and forwarding user data packets), packet data network gateway (P-GW), for providing connectivity of terminal devices to external packet data networks, or mobile management entity (MME), etc.

The user equipment (UE) illustrates one type of an apparatus to which resources on the air interface are allocated and assigned, and thus any feature described herein with a UE may be implemented with a corresponding apparatus, such as a relay node. An example of such a relay node is a layer 3 relay (self-backhauling relay) towards the base station. Another example of such a relay node is a layer 2 relay. Such a relay node may comprise a UE part and a Distributed Unit (DU) part. A CU (centralized unit) may coordinate the DU operation via F1AP -interface for example.

The UE may refer to a portable computing device that includes wireless mobile communication devices operating with or without a subscriber identification module (SIM), or an embedded SIM, eSIM. A UE may also be a device having capability to operate in Internet of Things (IoT) network which is a scenario in which objects are provided with the ability to transfer data over a network without requiring human-to-human or human-to-computer interaction. The UE may also utilise cloud computing. The UE (or in some embodiments a layer 3 relay node) is configured to perform one or more of user equipment functionalities. It is to be noted that the UE may also be a vehicle or a household appliance capable of using cellular communication.

Additionally, although the apparatuses have been depicted as single entities, different units, processors and/or memory units (not all shown in FIG. 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available.

The architecture in LTE networks is fully distributed in the radio and fully centralized in the core network. The low latency applications and services in 5G may require bringing the content close to the radio which may lead to local break out and multi-access edge computing (MEC).

The communication system is also able to communicate with other networks, such as the Internet 112. The communication network may be able to support usage of cloud services, for example at least part of core network operations may be carried out as a cloud service (this is depicted in FIG. 1 by "cloud" 114).

Constellation shaping of signals used in a wireless communication network, such as a cellular communication network may be categorized in geometric and probabilistic constellation shaping. The former considers the shaping of the constellation point locations, whereas the second technique optimizes the probability of the occurrence of the constellation points rather than their locations. A theoretical shaping gains of for example up to 1.5dB in signal-to-noise ratio (SNR) for additive white Gaussian noise (AWGN) channel conditions may be expected compared to applying for example square M-Quadrature Amplitude Modulation (M-QAM). Modulation constellation shape of signals may also determine the variation of the signal envelope and hence the peak average power ratio (PAPR) characteristics of the signals.

For example, for a single carrier (SC) signal, besides the modulation constellation shape, the signal may further be shaped by a pulse shaping filter, when transmitted by a transmitter, to limit the occupied bandwidth. When up-sampling and pulse shaping a SC signal, the variation of the signal envelope increases and causes PAPR regrowth. So, both modulation constellation and pulse shape determine the signal shape, with mutual dependency on each other. Thus, it may be desirable to have transmissions of signals with low PAPR to allow a power amplifier to operate with high efficiency and hence to reduce the power consumption. Further higher power may be output for coverage, and/or higher achievable link range.

Adapting the shape of the signal in accordance with energy spread in a channel in time and frequency may improve the transmission performance, since inter-symbol-interference (ISI) and inter-carrier-interference (ICI) may be minimized. Depending on various conditions, such as hardware capability, desired link range, and/or channel conditions, a certain chosen combination of modulation constellation shape and pulse shape, the pulse shape being for a transmitter filter and for a receiver filter, may result in a bad, suboptimal, or optimal spectral efficiency. To cope with the channel variation, for example link adaptation (LA) may be deployed. In for example 5G, the transmit Modulation and Coding Schemes (MCSs) may be adapted to observed channel fading conditions to improve the spectral efficiency. The chosen MCS may be selected from a look-up table (LUT) and may be pre-calculated for a certain desired performance e.g., 10% BLER value, using square M-QAM constellations with fix distance between the neighboring constellation points and fixed grey mapping. The adaptation in such as case may rely on channel state information (CSI, PMI, ...) reported by a user equipment (UE).

For improved data rates, reliability, and reduced power consumption, for example in 6G networks, may require extended flexibility in the network wherever possible, even at the PHY layer. Different channel conditions may present an opportunity to improve the quality of the link by utilizing tailor-made constellation pattern and filter shape for the link. Using for example machine learning (ML) based over the air techniques, there may be room to utilize for example neural networks to adapt the modulation constellation shape and pulse shape for channel condition provided that the needed flexibility is introduced in the PHY layer. ML may be understood as part of artificial intelligence (AI) and thus any AI-based approach may be considered as suitable as well. For example, a neural network may be designed to observe channel conditions and then, based on the channel conditions, select an optimum modulation constellation shape, which may also be referred to as a pattern, and pulse shaping for transmit and receive filters to provide improved link quality.

In 5G, fixed square M-QAM constellations may be used as modulation schemes with a pre-defined Euclidean distance between the neighboring points and a pre-defined grey mapping as modulation schemes. The standardized M-QAM may however be sub-optimal for a certain channel link and target system performance. LA, as designed in 5G, may constraint the channel adaptation to this set of predefined sub-optimal MCSs. Further, for a required ACLR and excess bandwidth level, PAPR of a signal can be controlled by shaping the transmit filter, and this dependency on the filter shape may be desirable to be utilized in LA. Thus, extended flexibility in the modulation constellation and the pulse shaping may be leveraged to maximize the rate and reliability of the transmissions, depending on the varying channel conditions with the UE location and speed, LOS/NLOS condition, carrier frequency, type of traffic etc... It is to be noted that the channel conditions may be understood to comprise at least one of a channel type and one or more key performance indicators (KPIs). A channel type may be for example one of the following: a transport channel, a logical channel, a physical channel.

The dependency of the modulation constellation shape and pulse shape on the channel model may be relatively high. In other words, for a given channel model, and UE speed, there may be a certain optimal parameter set of modulation constellation shape and pulse shape. The modulation constellation shaping and pulse shaping optimization may be referred to as waveform optimization. The pulse shaping may be understood as pulse shaping for transmitter filter and for receiver filter. An optimal modulation constellation shape and pulse shape for a given PAPR, excess bandwidth and/or ACLR may vary according to various factors such as the channel conditions, receiver location, actual traffic load, ..., e.g. If a waveform characteristic works fine for one tap delay line (TDL), the same waveform characteristic might not be optimal for another TDL.

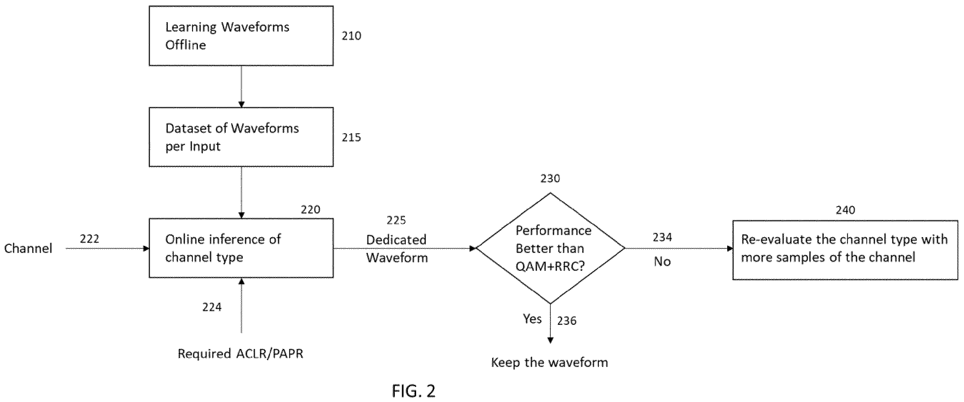

FIG. 2 illustrates a flow chart according to an example embodiment of optimizing a waveform for current channel conditions. In this example embodiment, machine learning (ML) is utilized to identify a channel model that most suitably represents current channel conditions. The most suitable representation may be for example the most accurate model with respect to the current channel conditions. In this example embodiment, first in block 210 offline learning may be performed with respect to identifying the waveforms that may be considered as most suitable for each channel model that is used in the offline learning. For example, using a gradient based method (e.g., stochastic gradient (SGD)) optimization may be performed in view of a constellation and pulse shape for a given receiver with specific properties over different configurations of channel models, PAPR/ACLR/excess bandwidth requirements, etc.

Then, in block 215, based on the offline learning a dataset may be built, wherein the dataset may then be used to associate a specific waveform to per channel model used in the offline learning. Thus, using the offline optimization, a modulation constellation shape and pulse shape pair may be assigned per an input configuration, wherein the input configuration may be understood to comprise a channel model and its associated requirement parameters that comprise one or more of the following: PAPR, excess bandwidth, or ACLR. The at least one requirement parameter may define a requirement for performance of transmission.

Once the dataset of waveforms per input has been built, the dataset may be utilized for determining the waveform to be used. Yet, as the current channel conditions may vary up to infinite different possibilities, the current channel conditions are to be represented using a channel model that is one of the channel models used in dataset. In other words, an individual channel model in the data set represents its associated channel conditions. Thus, ML may be utilized. For example, a neural network (NN) may be trained to identify the proper channel model to use as a representation of the channel conditions as well as requirement parameters associated with transmissions. The channel conditions may be for example the current channel conditions. Thus, as illustrated in block 220, the online inference may be performed based on inputs regarding the channel 222 and the requirement parameters for the transmission 224. As an output 225 the NN may then provide a dedicated waveform for the current channel conditions and requirement parameters using the dataset obtained using the offline training.

It is to be noted that the above-described inference in block 220 is an example. In some alternative examples, there may be a trained ML model, such as a trained NN, that enables to directly infer a waveform to be used.

Once the waveform is determined using the NN, then selected waveform may be communicated to an entity comprising a receiver that is intended to receive signals transmitted using the waveform. The receiver may be a receiver in a UE for example, or it may be a receiver in any other suitable network entity such as an access node. The waveform may be communicated to the receiver for example using signaling dedicated to informing the waveform. In some example embodiments, the waveform, which comprises the modulation constellation shape of signaling and pulse shapes for transmitter filter and receiver filter, may be communicated using a compression scheme.

In the example embodiment of FIG. 2, in block 230, the waveform may then optionally be evaluated in terms of determining whether the selected waveform performs better than QAM and root raised cosine (RRC), which would be used if ML was not utilized to select the waveform. If the performance is better, then the result 236 is to keep the selected waveform. If the performance is not better, then the results 234 is that the current channel conditions and the channel model representing it is to be re-evaluated as illustrated in block 240. This may comprise for example obtaining more samples of the channel.

During the offline learning, channel conditions that are quite different from each other may be selected and then represented using their respective channel models after which waveforms may be designed per channel models while also taking into account requirement parameters for the transmissions. The constellation points and filter coefficients may be trainable parameters, which may then be tabulated and standardized. The approach explained in the example embodiment of FIG. 2 may also be applicable to generating a specialized waveform with over-the-air (OTA) training which may be triggered by, for example, traffic characteristics. The traffic characteristics may indicate for example that the traffic comprises characteristics of augmented reality (AR) and/or virtual reality (VR).

The example embodiment of FIG. 2 may have a benefit of achieving for example a gain of up to 2 dB in spectral efficiency when compared with the square M-QAM modulation and RRC pulse shape. Also, adaptive regulation on PAPR level of the transmit signal, as excess bandwidth tradeoff, and hence increase power amplifier efficiency may be achieved. Therefore, operating in an optimal energy-efficient manner may be achieved.

The gain in spectral efficiency may be achieved as a result of the ability to design the transmitter and receiver filters with lower out of band leakage while maintaining the desired PAPR though joint optimization of the pulse shape and the constellation of signals. As an example, there may be a lower ACLR of -20dB compared to the -12.40dB legacy system may be achieved.

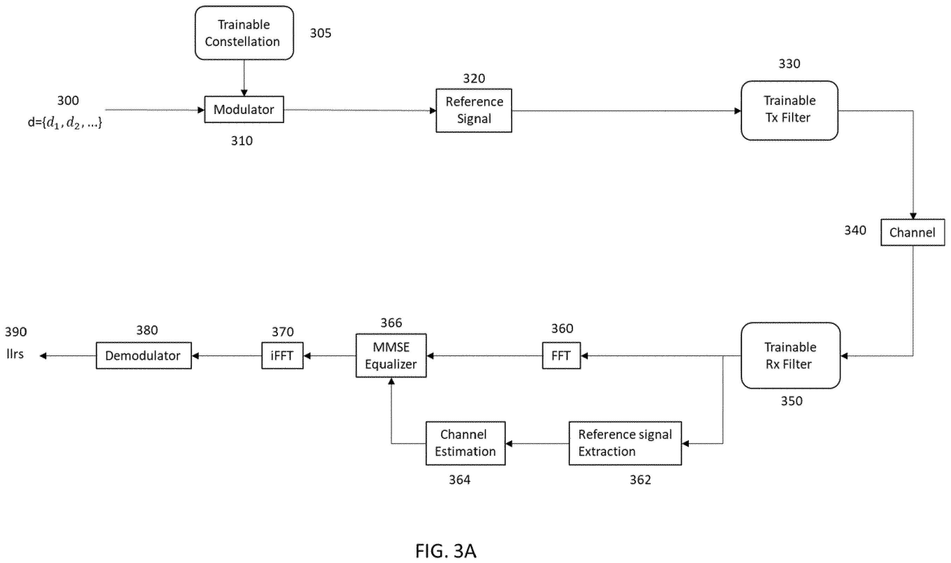

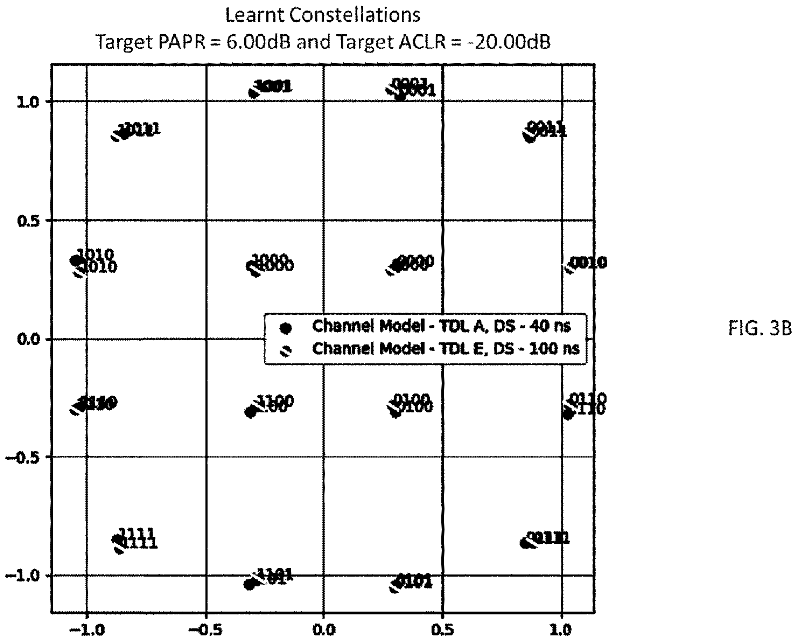

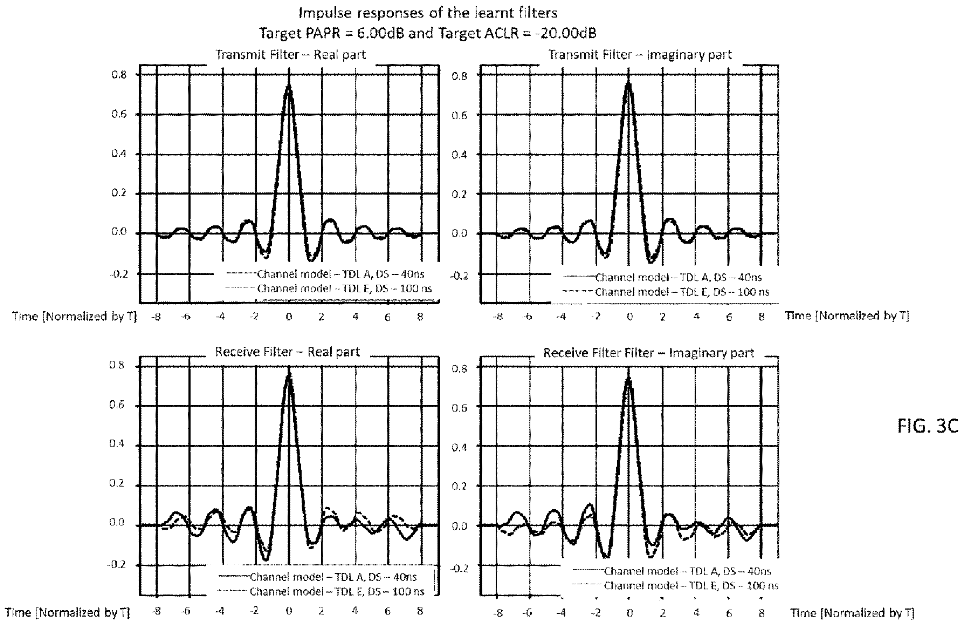

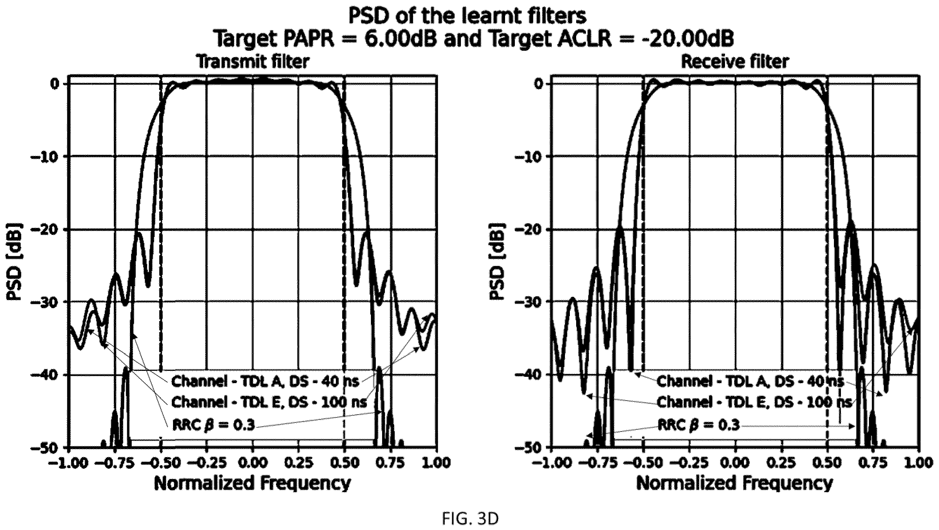

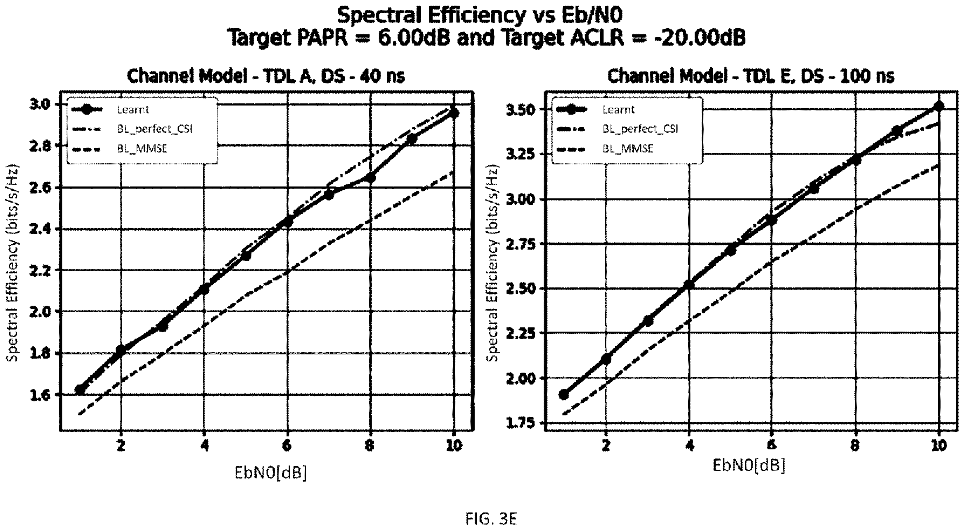

FIG. 3A illustrates an example embodiment in which a transmission system for a single carrier comprises trainable components that may be used for optimizing the waveform for transmission using ML. The transmission system may be for example for a single carrier frequency domain equalization, or for a single carrier time domain equalization. Thus, the example embodiment of FIG. 3 is compatible with the example embodiment of FIG. 2. In this example embodiment, the system has an architecture in which there is a modulator 310 that receives an input 300 that comprises random data bits. Additionally, the modulator 310 receives an input from a trainable component that is a trainable constellation unit 305. Other trainable components in the system of this example embodiment are transmit filter 330, which may be comprised for example in an access node, and a receive filter 350, which may be comprised in any suitable network entity such as an UE or another access node. The trainable components may be trained such that they are optimized based on constraints such as PAPR, ACLR, and channel conditions.

In this example embodiment, the random data bits are mapped using the learned constellation points provided by the trainable constellation unit 305 and subsequently prepended with a reference signal 320 for channel estimation. The reference signal may be for example unique word (UW). The constructed signal block is then pulse-shaped by the transmit filter 330, which inherits the impulse response defined by a trainable filter parameterization. The transmission is then transmitted using channel 340. At the receive side the receive filter 350 is applied based on the trainable parameters, like for the transmit filter 330. In this example embodiment, a discrete time cascaded channel is considered in the optimization procedure, which encapsulates the total effect of transmit, channel, and receive filter. Thus, the optimizing of waveform selection may be obtained in an end-to-end manner. Following receive filtering, in this example embodiment, in unit 360 Fast Fourier Transformation (FFT) is performed. In parallel, in unit 362 reference signal extraction, such as extraction of pilot UW, may be performed after which in unit 364 channel estimation is performed. After these parallel units, in unit 366 the distorted signal is equalized in the frequency domain using a minimum mean square error (MMSE) equalizer. The equalized signal is then fed to unit 370 for inverse FFT and demodulated in unit 380 to generate log likelihood ratios (LLRs) 390 for each transmitted bit.

The system illustrated in this example embodiment may then be assessed under different channel conditions using for example various 3GPP channel models to generate a dataset of specialized combinations of modulation constellation shapes and pulse shapes for transmission and receiver filters. This may be performed to maximize the transmission rate while meeting imposed constraints defined for example by the requirement parameters. To achieve this, the modulation constellation shape and pulse shape optimization may be optimized in an end-to-end fashion, minimizing the binary cross-entropy loss between the bits and LLRs under the constraints. During the training phase a Genie-aided channel covariance matrix which is built with exact channel coefficients may be used for channel estimation. In the evaluation phase, the optimized modulation constellation shape and pulse shape filters may be used, while channel covariance matrix may be estimated from a least square channel estimate.

It is to be noted that although the example embodiment of FIG. 3A is discussed in the context of single carrier transmission, the approach is applicable also to multicarrier transmissions.

FIG. 3B provides an example illustration of signal constellations for a first TDL, TDL-A and for a second TDL, TDL-E. The requirement parameters in this example embodiment are: target PAPR=6dB and target ACLR=-20dB. FIG. 3C illustrates example results for the TDL-A and TDL-B in terms of optimized pulse shape when the requirement parameters are the same as in the example of FIG. 3B. FIG. 3D illustrates an example of power spectral densities (PSD) with the requirement parameters being those of the example of FIG. 3B.

FIG. 3E illustrates an example of spectral efficiency with the requirement parameters of FIG. 3B for the TDL-A and TDL-E.

In an example embodiment, the following specific set of conditions may be used to define different example scenarios: channel model, signal interference and noise ratio (SINR), PAPR requirement, ACLR regulations.

For each example scenario an offline learning of optimal waveform may be performed in a manner as described above. As a result, a dataset of modulation constellation shapes, and pulse shapes for filters that fits each scenario the best may be obtained. A label may then be assigned for each scenario. The label may also be understood as corresponding to an index.

### Table 1 below is an example of such a dataset:

**Table 1**

| **Index** | **Channel model** | **PAPR** | **ACLR** | **Pulse-Shape** | **Constellation shape** |
|---|---|---|---|---|---|
| | | | | | |
| **0** | TDL-A | 4 | -20 | [derived from offline training] | [derived from offline training] |
| **1** | TDL-B | 4 | -20 | [derived from offline training] | [derived from offline training] |
| **2** | TDL-C | 4 | -20 | [derived from offline training] | [derived from offline training] |
| **3** | TDL-D | 4 | -20 | [derived from offline training] | [derived from offline training] |
| **4** | TDL-E | 4 | -20 | [derived from offline training] | [derived from offline training] |
| **5** | TDL-A | 5 | -20 | [derived from offline training] | [derived from offline training] |
| **6** | TDL-B | 5 | -20 | [derived from offline training] | [derived from offline training] |
| **7** | TDL-C | 5 | -20 | [derived from offline training] | [derived from offline training] |
| ... | ... | ... | ... | [derived from offline training] | [derived from offline training] |

In order to use a dataset, such as the dataset illustrated in Table 1, an estimate of the actual channel, which is the current channel, is required. For this, ML may be utilized. For example, an NN may be trained on many reference signals, such as sounding reference signal (SRS), and/or demodulation reference signal (DMRS), to learn a classifier that can map any input of channel samples into one of the different channel models that the dataset is built on.

Performance of the system may be monitored to see if the classifier makes a mistake, with regard to for example the case of QAM and RRC which has been measured in the initial stage. In case of lack of improvement, classification may be performed with more input data.

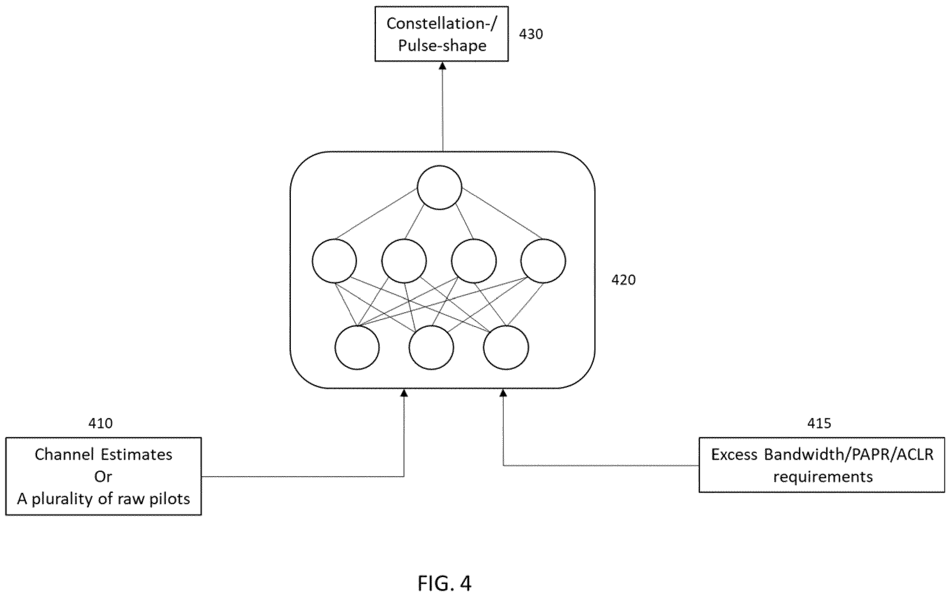

FIG. 4 illustrates an example embodiment in which online inference is used and a waveform to be used for transmission is selected using a trained ML model, which in this example embodiment is a NN, and a dataset obtained during an offline training. In this example embodiment, the trained ML model 420 receives as an input estimates of the current channel 410 and, optionally, associated requirement parameters 415. The channel estimation may be obtained for example from a channel estimation unit such as the channel estimation unit 364 introduced in FIG. 3A. The channel may be estimated based on one or more reference signals. Additionally, or alternatively, one or more data signals may also be used for channel estimation. The requirement parameters 415 may comprise for example PAPR, ACLR and/or excess bandwidth. The requirement parameters 415 may be system design parameter.

It is to be noted that in some alternative example embodiments, instead of providing the channel estimate as an input, a plurality of raw pilots may be used as an input. The raw pilots may be understood as pilot signals that may be used as raw channel estimates.

Based on the input that comprises the channel estimation 410 and the requirement parameters 415, the trained ML model 420 may the provide as an output a label that corresponds to an index of a channel model in the dataset obtained from the offline learning. The index of the channel model then also maps the pulse shape and modulation constellation shape. Thus, the trained ML model classifies the channel estimate samples into one of the available classes to assign an index, which then maps to the [pulse-shape, modulation constellation shape].

Optionally, the ML model may be trained for each combination of requirement parameters separately, which may be beneficial if an access node, that transmits the signaling, sets the parameter values once.

Training process of the ML model may follow for example a backpropagation procedure. The training samples for channel estimates may be produced for example by a link level estimator, after sending noisy pilots through a channel estimator. Since it is known from which channel model each sample is produced, labels may be assigned to them correspondingly.

Thus, a benefit of the example embodiments described above is that it is possible to assign highly optimized waveforms which can satisfy excess bandwidth, ACLR and/or PAPR requirements of the network and a power amplifier (PA), to each specific channel.

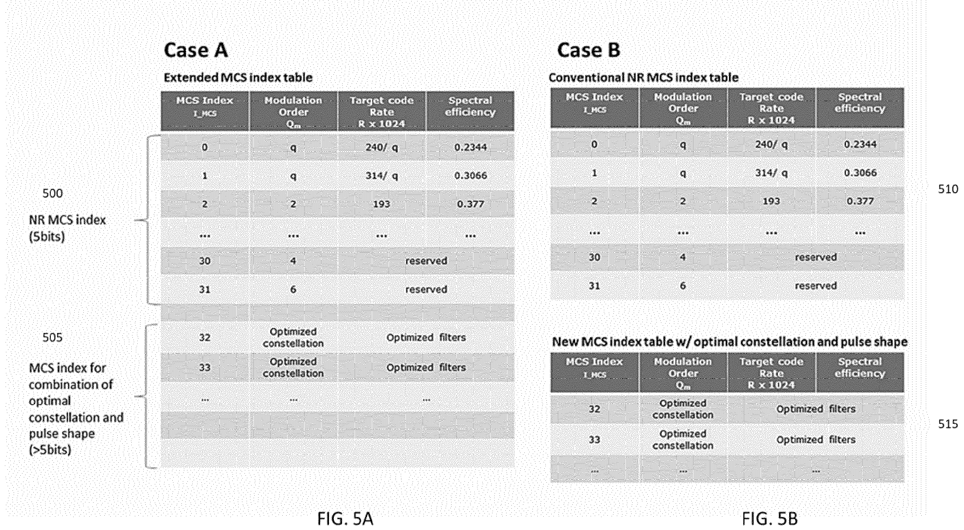

Once the waveform is determined, then the waveform is also to be indicated to a receiver. The receiver may be a UE or any other network entity. In case the dataset used is for example standardized such that the receiver is aware of it, it may be sufficient to provide an index of the dataset to the receiver to indicate the selected waveform. The dataset may be included for example into a standardized modulation and coding scheme (MCS) dataset2, such as an index table, that is used for link adaptation as additional entries. In this case the number of bits reserved for the MCS field in downlink control information (DCI) may be increased to accommodate these new entries. The number of bits that are needed for the increase may depend on the number of dedicated combinations of modulation constellation shape and pulse shape associated with various channel conditions, desired granularity of the modulation order and code rates. FIG. 5A illustrates an example table, that is an index table, for this. In this example, the table comprises the part 500 that is used for 5G MCS index, which may be indicated using 5 bits. The table then comprises an additional part 505 that is for MCS index for combination of optimal signal constellation and pulse shape. Bits additional to the 5 bits reserved for the part 500 may be used to indicate the optimal waveform. Thus, the table illustrated in FIG. 5A may be considered as an extended MCS index table.

Alternatively, a separate MCS index table may be used. An example of such a separate index table is illustrated in FIG. 5B. In this example, there may thus be switching between for example a 5G MCS index table 510 and a new MCS index table 515, which comprises a dataset of optimal combinations of signal constellations and pulse shape parameters for transmitter and receiver filters. The MCS index table that is to be used for a transmission may then be indicated to a receiver for example in the Radio Resource Control (RRC) reconfiguration using e.g., `mcs table' or 'transform precoder' parameter.

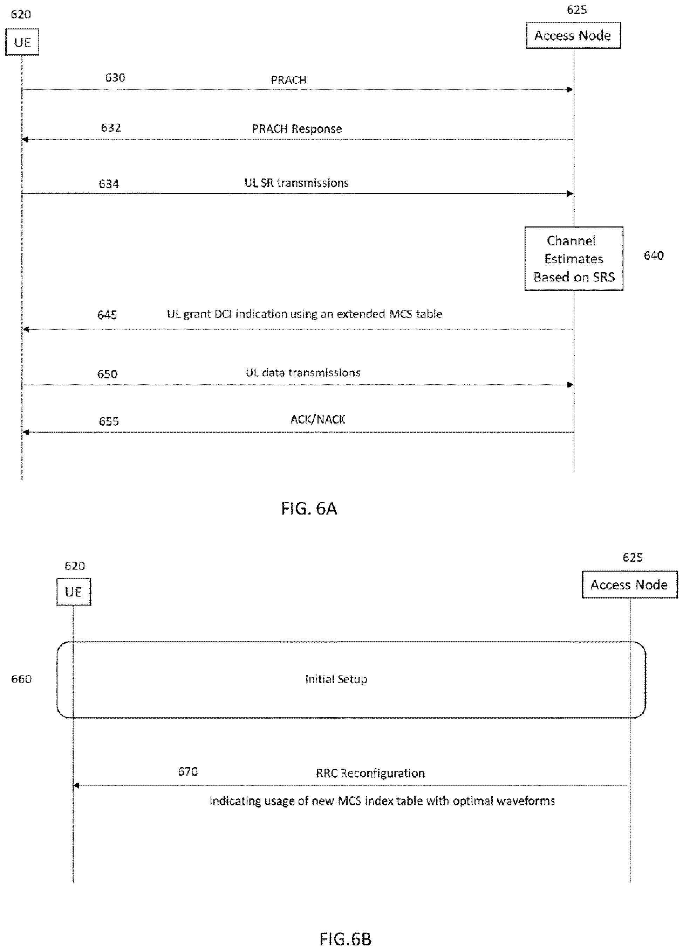

FIG. 6A illustrates a signaling chart according to an example embodiment in which an extended MCS index table, such as described in the example of FIG. 5A, is used. In this example embodiment the receiver is comprised in a UE 620 and The UE 620 communicates with an access node 625. In this example embodiment, the UE 620 first transmits the signaling 630 comprising physical random access channel (PRACH) to the access node 625. Then, in response to receiving the signaling 630, the access node 625 transmits signaling 632 comprising PRACH response to the UE 620. The 630 then transmits signaling 634 comprising uplink (UL) scheduling request (SR) to the access node 625. The access node 625 then determines channel estimates based on reference signals and/or data signals as illustrated in block 640. Using the channel estimates the access node 625 may then determine an optimal waveform in a manner such as described above in previous example embodiments. Then, the access node 625 may transmit signaling 645 to the UE, and the signaling 645 may comprise an UL grant DCI indication using an extended MCS table such as described in the example of FIG. 5A.

FIG. 6B illustrates another signaling chart according to an example embodiment in which a separate MCS index table for selecting an optimal waveform, such as described in the example of FIG. 5B, is used. In this example embodiment, like in the example embodiment of FIG. 6A, the receiver is comprised in the UE 620 that communicates with the access node 625. First, there is signaling 660 for the initial setup for the communication between the UE 620 and the access node 625. Then, the access node 625 transmits signaling 670 for an RRC reconfiguration that is for indicating the use of the separate MCS index table for selecting the optimal waveform, in other words, for selecting an optimal combination of modulation constellation shape and pulse shape for the transmit and receiver filters. To do this, for example a parameter transformPrecoder may be used.

It is to be noted that in the context of the example embodiments described above, once the channel model representing the current channel conditions is determined, the dynamic parameters affecting mostly the signaling constellation may be reduced to for example SINR and speed associated with the receiver. This may have a benefit of reducing complexity.

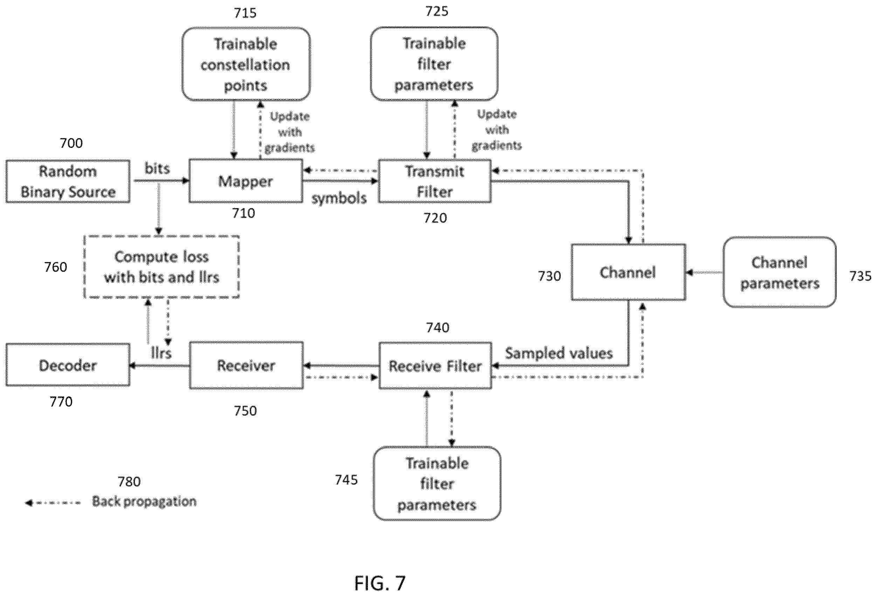

While FIG. 3A illustrates an example embodiment of a transmission system, FIG. 7 illustrates a more detailed example embodiment of a training process for determining an optimal waveform for a transmission system such as that discussed in the example embodiment of FIG. 3A. In this example embodiment there are random bits obtained from a random binary source unit 700. It is to be noted that the units in this example embodiment are logical units and their actual implementation may vary. The bits are then forwarded to the mapper unit 710, which also receives inputs from a unit 715 that is for trainable modulation constellation points.

For the unit 715, a 2D constellation layer, where the constellation is modelled as a trainable layer with complex weights representing the constellation points may be used. In this example embodiment, the constellation layer is centred to avoid learning a shift in mean form an origin, in other words, a shift from the centre and normalized to have unit energy. Such a constellation with 2^K constellation points where K is the modulation order is defined as, $C = \frac{{C}^{˜} - {2}^{- K} {\sum }_{c ∈ {C}^{˜}} c}{\sqrt{{2}^{- K} {\sum }_{c ∈ {C}^{˜}} {\left|c\right|}^{2} - {\left|{2}^{- K}{\sum }_{c ∈ {C}^{˜}} c\right|}^{2}}}$

The modulator inherits this constellation which maps the random data bits from the outer coder/binary source. It is to be noted that this does not introduce additional complexity in the inference phase but allows training of the constellation as a 2D constellation within phase and quadrature components as in the conventional systems. A learned constellation can be used in place of a standard constellation such as QAM.

The mapper 710 then provides symbols to the transmit filter unit 720. The transmit filter 720 in this example embodiment receives input from unit 725 is that is for obtaining trainable filter parameters. In this example embodiment, the parameterized trainable filter 720, and also the parameterized trainable receiver filter 740 that receives input from the unit 745 that is for trainable filter parametes as well, are defined using the fact that the {sinc(Df-s)}_{s∈Z} functions form a frequency-domain basis of functions which are contained in the time window ( $- \frac{D}{2} , \frac{D}{2}$). Therefore, the filters are defined as, ${\hat{g}}_{tx , θ} \left(f\right) : = \sqrt{C \left(θ\right)} {\sum }_{s = - S}^{S} {θ}_{s} sinc \left(Df-s\right)$ ${\hat{g}}_{rx , ψ} \left(f\right) : = {\sum }_{s = - S}^{S} {ψ}_{s} sinc \left(Df-s\right)$ where S is the frequency points for one side of the frequency response and ***θ*** = [*θ*_{-*S*}, ..., *θ*₀, ..., *θ_{S}*]^{T} and ***ψ*** = [*ψ*_{-*S*}, ..., *ψ*₀, ..., *ψ_{S}*]^{T} are the trainable filter parameters for transmit and receive filters respectively. *C*(***θ***) is a normalization constant which ensures the unit energy in the transmit filter. By taking the inverse Fourier Transform, we can obtain the impulse response of the filters as, ${g}_{tx , θ} \left(t\right) = \frac{\sqrt{C \left(θ\right)}}{D} rect \left(\frac{t}{D}\right) {\sum }_{s = - S}^{S} {θ}_{s} {e}^{j 2 π \frac{s}{D} t}$ ${g}_{rx , ψ} \left(t\right) = \frac{1}{D} rect \left(\frac{t}{D}\right) {\sum }_{s = - S}^{S} {ψ}_{s} {e}^{j 2 π \frac{s}{D} t}$

The filters are characterized by a Fourier series of 2S+1 coefficients with a time-limited pulse shape of period D.

The transmitter then transmits to the receiver using the channel 730 and the channel is associated with the channel parameters 735. In this example embodiment, time multiplexed unique words constructed using Zadoff Chu sequences for channel estimation are used. As described earlier, two blocks of the same unique word of length M may be added. The first unique word may act as a cyclic prefix for proper frequency domain equalization while the second unique word is used for channel estimation. The MMSE channel estimate is *H̃_{N}* = *R*(*R* + *σ*²*I_{N}*)⁻¹*Ȟ_{N}* where *R* is the frequency domain channel covariance matrix and *σ*² is the noise variance. The channel covariance matrix is pre calculated, constructed during the training process or measured depending on the training setting.

Linear equalization may be performed in frequency domain based on the channel estimate *Ȟ_{N}* or *H̃_{N}* and subsequently converted back to time domain for demodulation process. The equalized symbols *ř* may be demodulated assuming no ISI with an AWGN optimal demapper which calculates the log likelihood ratio for each bit as, 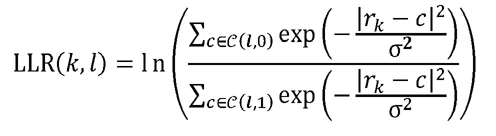 where LLR(*k*, *l*) is the LLR for the l^{th} bit (0 ≤ l ≤ L - 1) of the k^{th} symbol (0 ≤ k ≤ N - 1), and G is the subset of 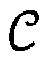 which contains all constellation points with the l^{th} bit label set to 0(1).

The multipath channel may be modelled using the discrete time baseband channel which considers the cascaded channel filter encapsulating the effects of the transmit filter, channel impulse response and the receiver filter. The channel filter is defined as, $h = \left\{{h}_{l}={\sum }_{p = 0}^{P - 1} {a}_{p} p \left(lT-{τ}_{p}\right) , - {l}_{min} < l < {l}_{max}\right\}$ where (*aₚ*(*t*)*, τₚ*), 0 ≤ *p* ≤ *P* - 1 are the channel gains and the delays of the paths in the channel impulse response and $p \left(t\right) = {g}_{tx , θ} ∗ {g}_{rx , ψ}^{∗} \left(t\right)$ is the convolution of the transmit and receive pulse shaping filter. The channel filter length *-lₘᵢₙ* < *l* < *lₘₐₓ,* is chosen appropriately to ensure that the expected maximum delay spread of the channel is taken in to account.

The received and sampled signal with the symbol period T, goes through the trainable receive filter to yield *r* = {*rₙ,n* = 0,1,..., *N* - 1} such that: ${r}_{n} = {\sum }_{l} {s}_{n - l} {h}_{l} + {w}_{n}$ when the transmit symbol set is *s* = {*sₖ, k* = 0,1,..., *N* - 1} and the cascaded channel coefficients are h. The additive Gaussian noise *wₙ*~ N(0,Σ) where Σ is the noise correlation obtained as Equation 29 in [6]. During the optimization the correlated noise samples *wₙ* can be obtained using the Cholesky decomposition of the correlation matrix such that Σ = *LL^{H}.* Then *wₙ* = *LX* such that *X~* N(0, I).

The receiver filter 740 then provides its output to the receiver unit 750, which provides its output, that comprises llrs, to the decoder unit 770, and additionally also to the unit 760 that is for computing loss with bits and llrs. The unit 760 also receives as its input the bits from the unit 700 that is the random binary source. In this example embodiment, the binary cross entropy loss between the transmitted bits and the LLRs is minimized along with the PAPR and ACLR constraints using the Augmented Lagrangian technique for solving constrained optimization problem. It solves a sequence of unconstrained optimisation problems which are defined through the Augmented Lagrangian at each step as: 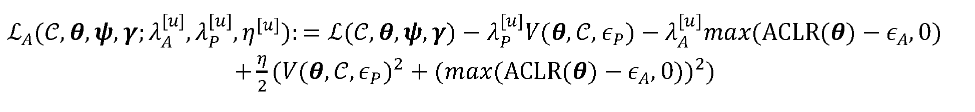 where the superscript [u] refers to the u^{th} iteration, ${λ}_{A}^{\left[u\right]}$ and ${λ}_{P}^{\left[u\right]}$ are the Lagrange multipliers, and *η* is a positive penalty parameter that is progressively increased. At each iteration, minimizing the augmented Lagrangian is approximately achieved through stochastic gradient descent. $L \left(C,θ,ψ,γ\right) \approx - \frac{1}{MN} {\sum }_{m = 0}^{M - 1} {\sum }_{n = 0}^{N - 1} {\sum }_{k = 0}^{K - 1} {log}_{2} \left({Q}_{γ}\left({B}_{n ,k}^{\left[m\right]}| {r}^{\left[m\right]}\right)\right)$ which the posterior distribution ${Q}_{γ} \left({B}_{n , k}^{\left[m\right]} |{r}^{\left[m\right]}\right)$, 0 ≤ *n* ≤ *N* - 1 , 0 ≤ *k* ≤ *K* - 1 is the LLRs, on the transmitted bits ${B}_{n , k}^{\left[m\right]}$ from the received samples **r**^{[*m*]} for each sample in the batch *m* for *M* batches. 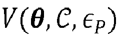 is the PAPR constraint for the waveform computed using Montecarlo Sampling: 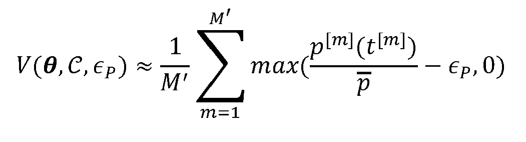 where *M'* is the number of samples and *ε_{P}* is the PAPR target. ACLR(***θ***) is the adjacent channel leakage ratio. Training algorithm may be implemented with SGD on the augmented Lagrangian in each training step while incrementing the penalty in each epoch to evaluate the impact of the constraints. The SGD step in the algorithm is computed using backpropagation through the chain of the transmission system as illustrated using the arrow 780.

The information rate in this example embodiment is related to control element (CE) loss by: $R \left(C, θ, ψ, γ\right) = K - L \left(C, θ, ψ, γ\right)$ where K is the modulation order and 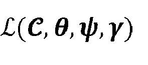 is the CE loss defined earlier.

The spectral efficiency may be calculated considering the time and frequency resources used in the transmission and effective bandwidth *BW_{eff}* where *BW_{eff}* is defined as the bandwidth with 99% of power containment.

Geometric shaping and pulse design are non-convex problems which makes the solutions dependent on the initialization settings. In an example multiple settings for initialization were tested and the used settings are as follows.
- Trainable modulation constellation: Constellation points initialized with points from a standard QAM
- Trainable filters: Trainable parameters initialized with 1+1j

Evaluation parameters were then as depicted in Table 2 below:

**Table 2**

| | |
|---|---|
| Modulation order | 4 |
| PAPR Targets | 4,5,6 (dB) |
| ACLR Targets | -12.4,-20 (dB) |
| Channel Models | TDL A with 40,100 ns and TDL E with 100,400ns |
| EbN0 range | 1-10 dB |
| Number of pilots (UW length) | 64 |
| Pilot type | Zadoff Chu - fixed |
| Constellation initialization | QAM |
| Filter Initialization | Wideband (1+1j for all parameters) |

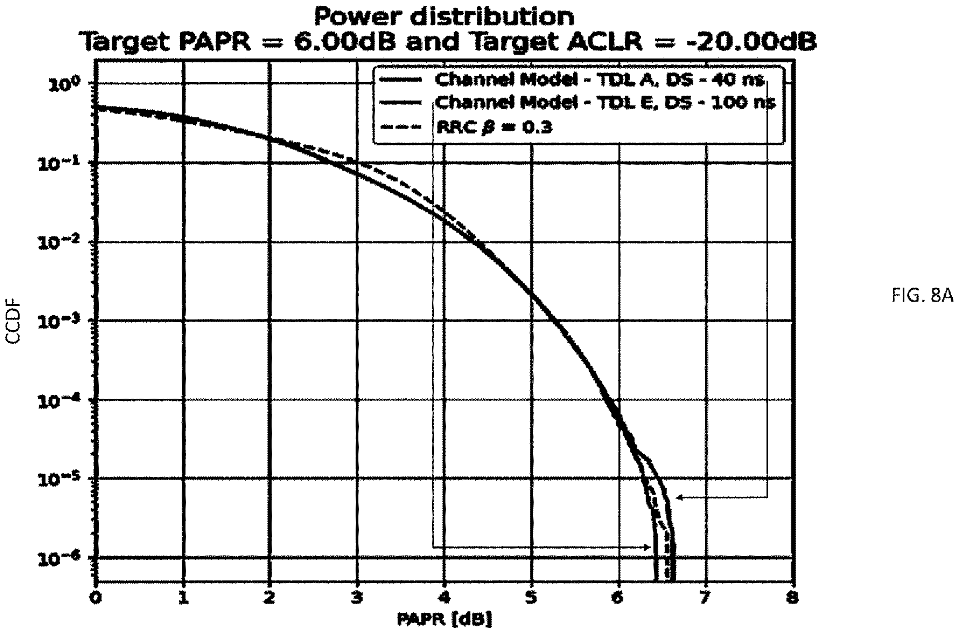

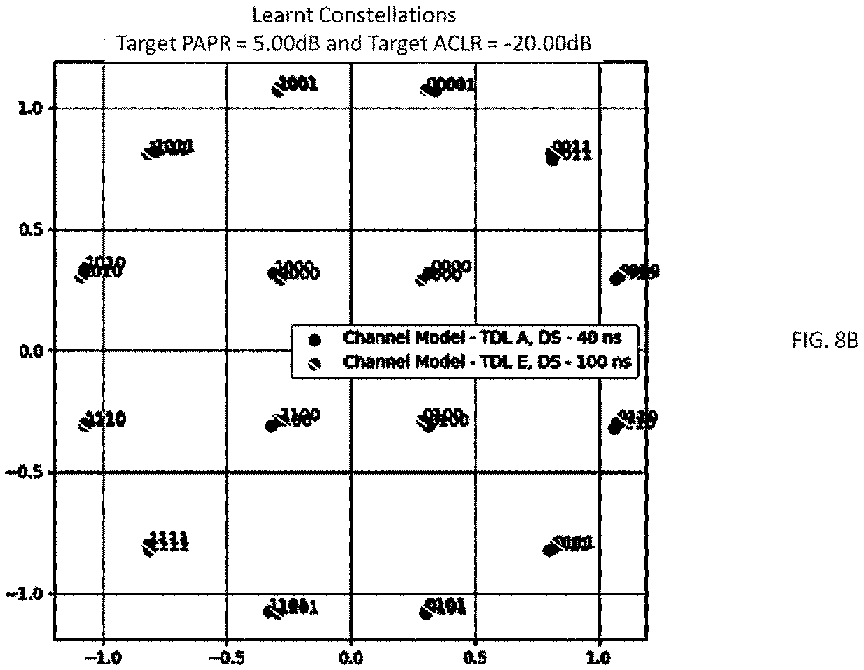

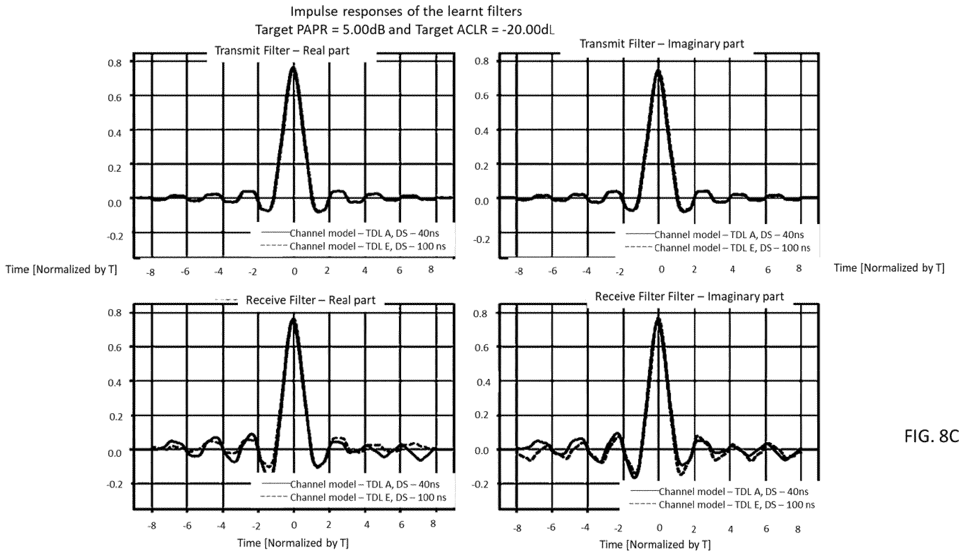

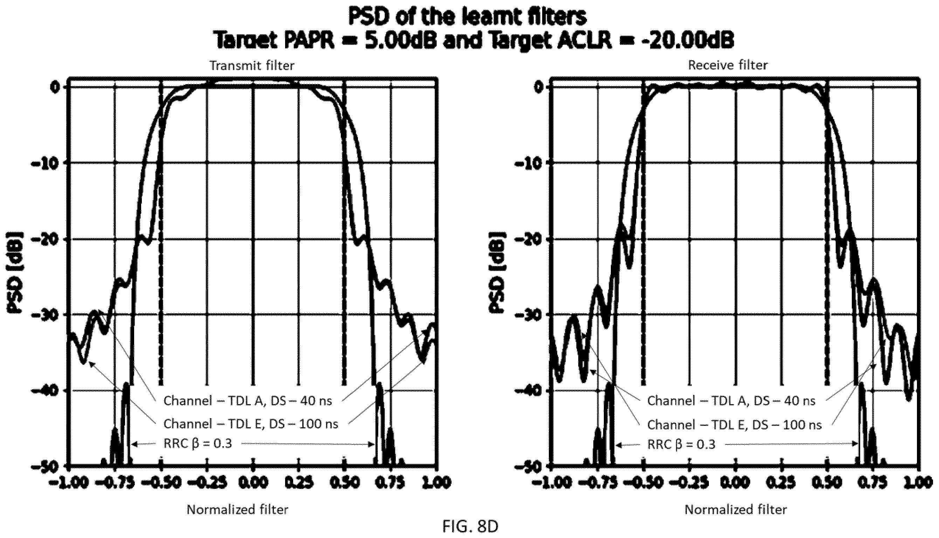

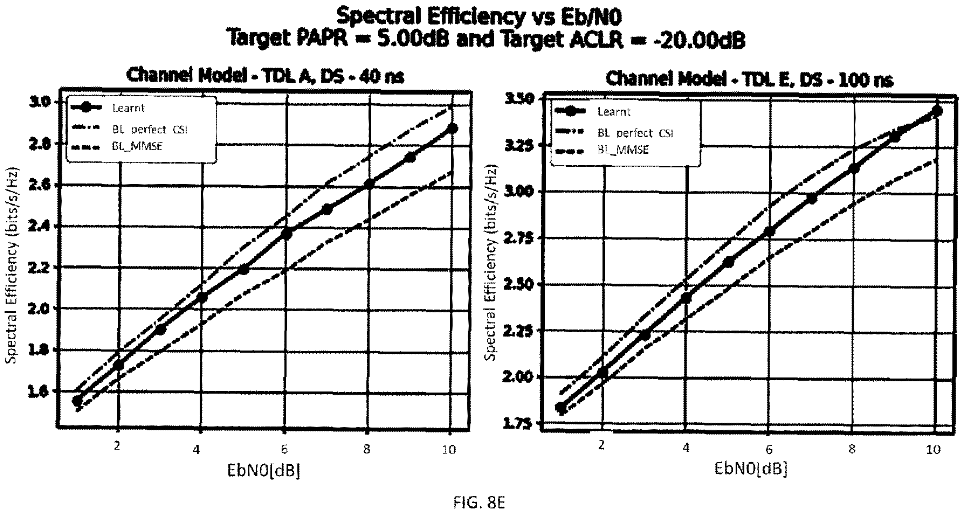

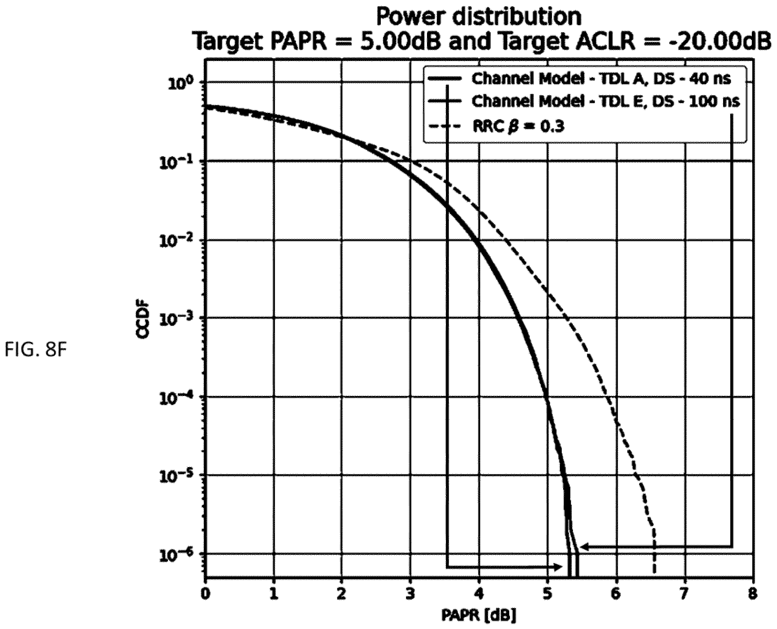

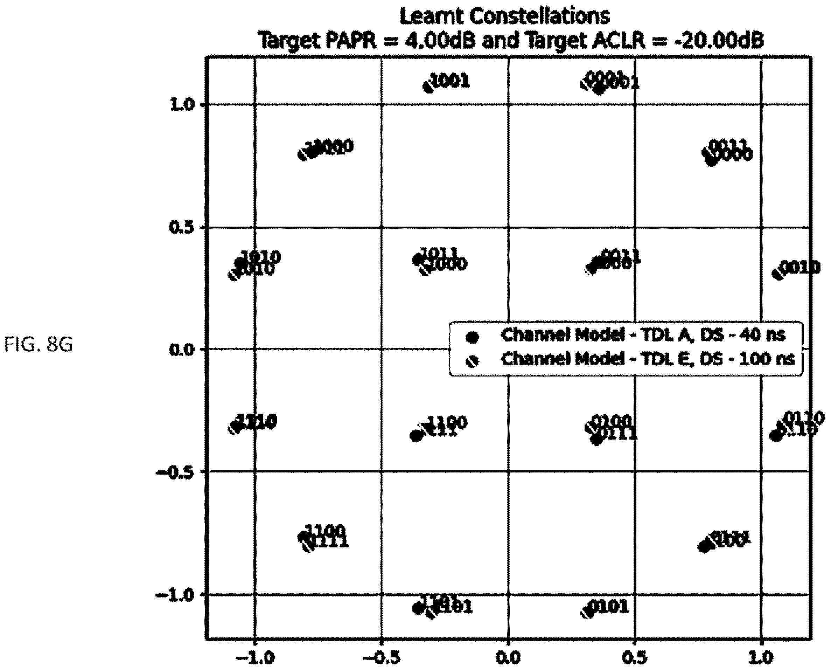

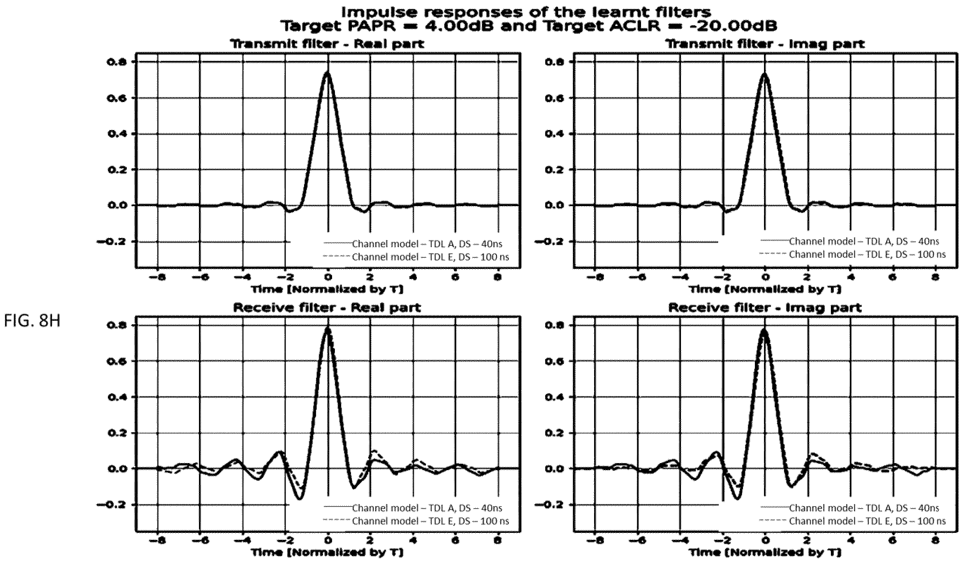

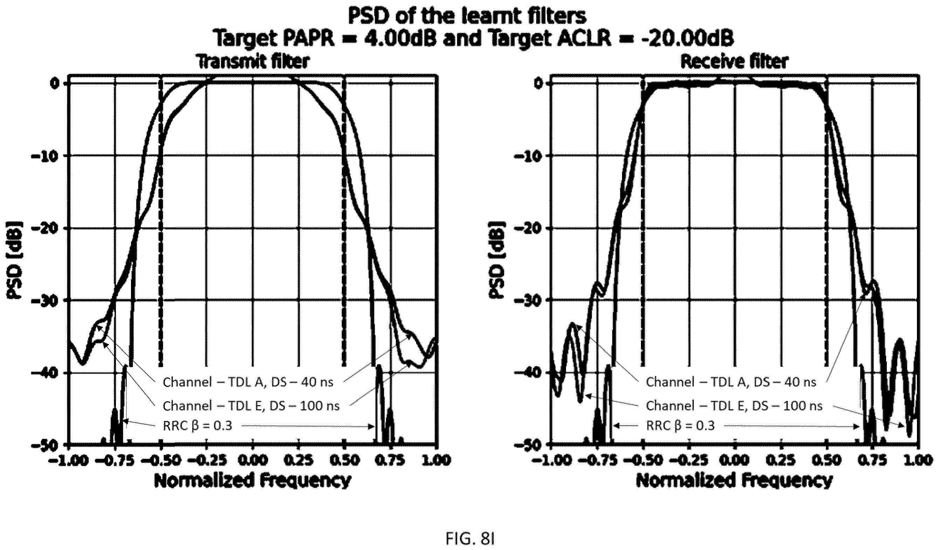

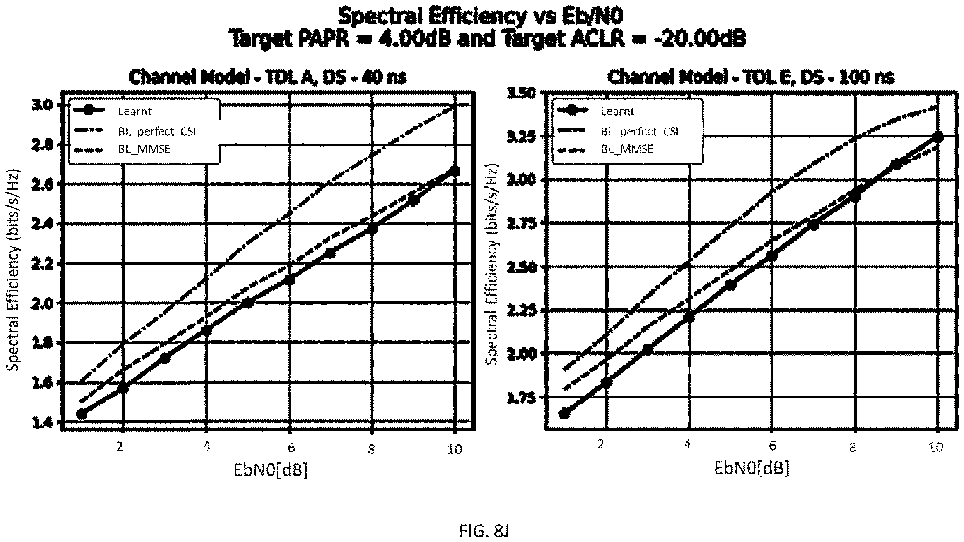

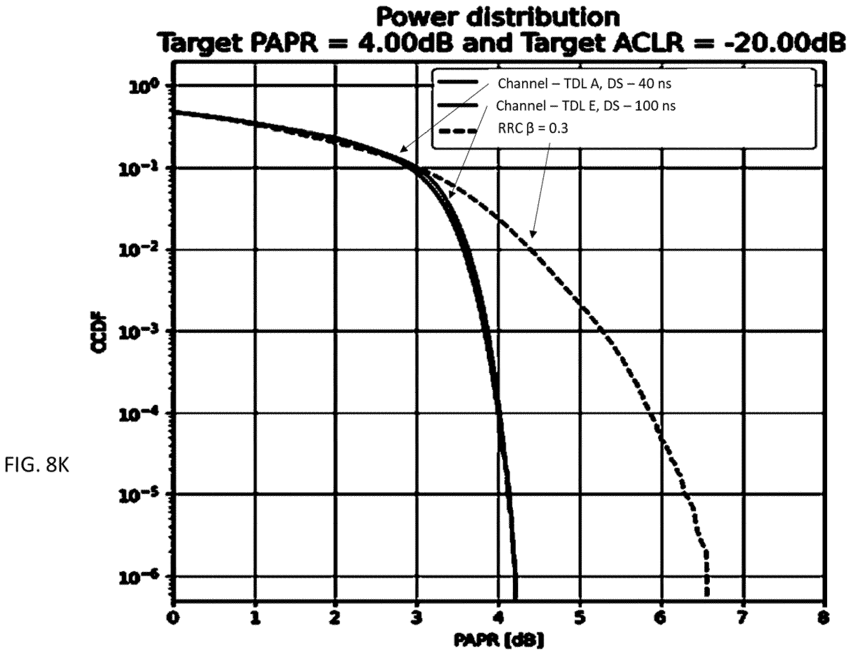

Simulation results are then illustrated in FIG. 8A-8K in which the simulation results are for two different TDLs, TDL-A and TDL-E. In FIG. 8A, the power distribution for target PAPR 6dB and target ACLR -20dB are illustrated. In FIG. 8B the signal constellations for target PAPR 5dB and target ACLR -20dB are illustrated. In FIG. 8C, impulse responses of the learnt filters are illustrated for target PAPR 5 dB and target ACLR -20 dB. The real and imaginary parts for the transmit and receiver filters are illustrated. In. FIG. 8D power spectral density (PSD) of the learnt filters are illustrated for target PAPR 5dB and target ACLR -20dB. In FIG. 8E spectral efficiency vs Eb/N0 is illustrated for target PAPR 5dB and target ACLR -20dB. In FIG. 8F power distribution is illustrated for target PAPR 5dB and target ACLR -20dB. In FIG. 8G learnt signal constellations are illustrated for target PAPR 4dB and target ACLR -20dB. In FIG. 8H impulse responses of the learnt filters are illustrated for target PAPR 4dB and target ACLR -20dB. In FIG. 8I PSD of the learnt filters is illustrated for target PAPR 4dB and target ACLR -20dB. In FIG. 8J spectral efficiency vs Eb/N0 is illustrated for target PAPR 4dB and target ACLR -20dB. FIG. 8K illustrates power distribution for target PAPR 4dB and target ACLR -20dB.

As can be seen from the simulation results illustrated in FIG. 8A-8F, the approach of BL-MMSE does not achieve as good results as using the ML aided approach described in the example embodiments. FIG. 8G-8K then illustrate examples in which more PAPR gain is achieved at the expense of slight loss in spectral efficiency.

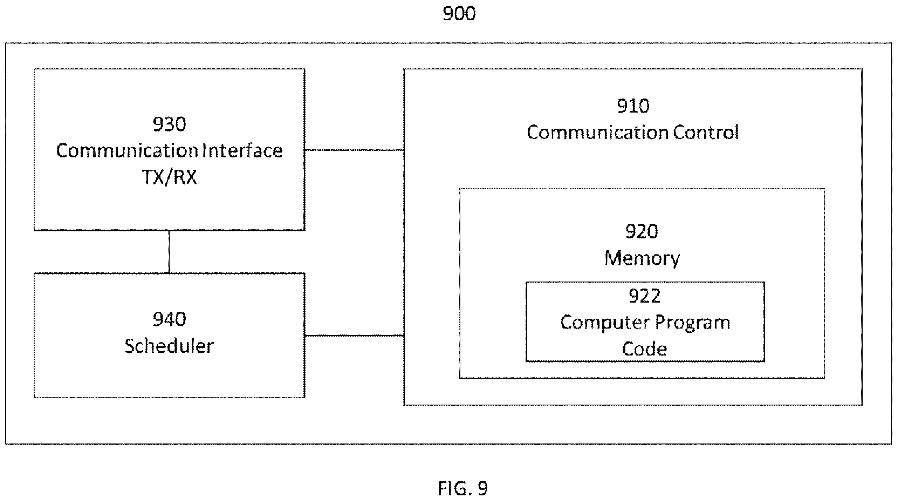

FIG. 9 illustrates an example embodiment of an apparatus that may be an access node or be comprised in an access node such as a gNB. The apparatus may be, for example, a circuitry or a chipset applicable to an access node to realize the described embodiments. The apparatus 900 may be an electronic device comprising one or more electronic circuitries. The apparatus 900 may comprise a communication control circuitry 910 such as at least one processor, and at least one memory 920 including a computer program code (software) 922 wherein the at least one memory and the computer program code (software) 922 are configured, with the at least one processor, to cause the apparatus 900 to carry out any one of the example embodiments of the access node described above.

The memory 920 may be implemented using any suitable data storage technology, such as semiconductor-based memory devices, flash memory, magnetic memory devices and systems, optical memory devices and systems, fixed memory and removable memory. The memory may comprise a configuration database for storing configuration data. For example, the configuration database may store current neighbour cell list, and, in some example embodiments, structures of the frames used in the detected neighbour cells.

The apparatus 900 may further comprise a communication interface 930 comprising hardware and/or software for realizing communication connectivity according to one or more communication protocols. The communication interface 930 may provide the apparatus with radio communication capabilities to communicate in the cellular communication system. The communication interface may, for example, provide a radio interface to terminal devices. The apparatus 900 may further comprise another interface towards a core network such as the network coordinator apparatus and/or to the access nodes of the cellular communication system. The apparatus 900 may further comprise a scheduler 940 that is configured to allocate resources.

Even though the invention has been described above with reference to examples according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus comprising at least one processor, and at least one memory storing instructions that, when executed by the at least one processor, are configured to cause the apparatus at least to:
provide to a machine learning model, as an input, a channel estimation or a plurality of raw pilots;
obtain, from the machine learning model, as an output, a label indicating a channel model, wherein the channel model is representative of channel conditions;
based on the label, determine a waveform associated with the channel conditions;
indicate the waveform to the receiver; and
perform the transmission to the receiver using the waveform.

2. The apparatus according to claim 1, wherein the channel estimation is based on one or more signals that comprise one or more of the following: at least one reference signal, at least one data signal, or at least one reference signal and at least one data signal.

3. The apparatus according to claim 1 or 2, wherein the channel conditions comprise at least one of a channel type and a key performance indicator.

4. An apparatus according to any previous claim, wherein the waveform comprises modulation constellation shape and pulse shape, wherein the pulse shape is for transmit and receive filters.

5. The apparatus according to any previous claim, wherein the input to the machine learning model further comprises at least one parameter defining a requirement for performance of transmission, in particular, one or more of the following: peak to average power ratio, excess bandwidth, or adjacent channel leakage ratio.

6. The apparatus according to any previous claim, wherein the machine learning model is trained using a pre-determined set of channel models and the channel model indicated by the label is one of the pre-determined channel models.

7. The apparatus according to claim 6, wherein the pre-determined set of channel models is comprised in a dataset, and the dataset defines a waveform associated with an individual channel model comprised in the pre-determined set of channel models, and wherein the individual channel model represents its associated channel conditions.

8. The apparatus according to claim 7, wherein the dataset is based on one or more of the following: simulation results, or onsite data.

9. The apparatus according to any previous claim, wherein the waveform associated with the channel conditions is identified by an index, and the index is associated with an extended modulation and coding scheme index table, or with a separate modulation and coding scheme index table dedicated for associating the waveform and the channel conditions obtained as the output from the machine learning model, and wherein indicating the waveform to the user equipment comprises indicating the index to the receiver.

10. The apparatus according to claim 9, wherein the index is indicated to the receiver using one or more additional entries in a modulation and coding scheme set used for link adaptation.

11. The apparatus according to any previous claim, wherein the apparatus is further caused to monitor outputs provided by the machine learning model and compare those to previously determined quadrature amplitude modulation and root raised cosine measurements for determining if the machine learning model is to be re-trained.

12. The apparatus according to any previous claim, wherein the apparatus is comprised in an access node.

13. The apparatus according to any previous claim, wherein a receiver for the transmission is comprised in a user equipment.

14. A method comprising:
providing to a machine learning model, as an input, a channel estimation or a plurality of raw pilots ;
obtaining, from the machine learning model, as an output, a label indicating a channel model, wherein the channel model is representative of channel conditions;
based on the label, determining a waveform associated with the channel conditions;
indicating the waveform to the receiver; and
performing the transmission to the receiver using the waveform.

15. A computer program comprising instructions which, when executed by an apparatus, cause the apparatus to perform at least the following:
provide to a machine learning model, as an input, a channel estimation or a plurality of raw pilots;
obtain, from the machine learning model, as an output, a label indicating a channel model, wherein the channel model is representative of channel conditions;
based on the label, determine a waveform associated with the channel conditions;
indicate the waveform to the receiver; and
perform the transmission to the receiver using the waveform.
